# DEMANDE DE BREVET EUROPEEN

(11) **EP 0 936 056 A1**
(43) Date de publication de la demande: **18.08.1999**
(21) Numéro de dépôt: 99400278.0
(22) Date de dépôt: 05.02.1999
(51) Int. Cl.: B29C 70/42, B30B 5/02

(54) **Procédé de moulage sans presse et dispositif associe**

(30) Priorité: 10.02.1998 FR 9802737
(71) Demandeur: INSTITUT FRANCAIS DU PETROLE, 92852 Rueil-Malmaison Cedex (FR)
(72) Inventeur: Huvey, Michel, 78380 Bougival (FR)

(57) **Abrégé**

- Procédé de moulage de pièces en matériau composite comprenant une étape au cours de laquelle on exerce à l'aide de moyens appropriés une pression variable sur le matériau composite pour chasser le gaz et les produits, et simultanément on porte à une température donnée le moule rempli du matériau composite pour permettre la transformation du matériau composite.

## Description

La présente invention concerne un procédé de moulage d'un élément en matériau composite utilisant un moule qui comporte des moyens propres permettant d'exercer initialement sur le matériau une pression et de maintenir la pression lorsqu'elle évolue au cours du procédé de moulage.

La pression initiale et son maintien au cours du procédé de moulage sont déterminés pour éliminer les produits volatils pouvant être présents initialement dans le matériau et qui sont responsables de défauts diminuant la résistance mécanique de l'objet moulé.

En effet, on sait que pour obtenir des matériaux présentant de bonnes propriétés mécaniques à long terme, il est souhaitable d'éliminer toutes les inclusions gazeuses, notamment les bulles ou les micro-bulles des matériaux composites.

Simultanément, on porte en température le moule rempli du matériau composite.

Par matériau composite ou produit en matériau composite, il faut comprendre les divers produits fabriqués à partir, ou comportant, une certaine proportion d'éléments de renfort noyés dans de la résine thermodurcissable. Un élément de renfort peut se présenter sous la forme d'un ou plusieurs fils, de ruban, de tissus ou d'une nappe de largeur variable comportant des fils parallèles longitudinaux, obliques ou perpendiculaires.

Différents procédés de moulage pour réaliser des objets ne comportant pas de bulles ou de micro-bulles sont connus de l'art antérieur.

Une manière courante de procéder dans l'industrie consiste à chasser les inclusions gazeuses hors du moule avec une partie de la matière, et à comprimer le reste sous une pression suffisante pour que les gaz inclus et les produits volatils se dissolvent dans la masse du matériau durant la première phase du moulage.

Pour mouler des produits en composite thermodurcissable lors d'une fabrication en grandes quantités, on introduit le produit à mouler froid dans un moule chaud placé dans une presse. La presse assure la fermeture du moule et exerce une pression permettant à une partie des gaz inclus d'être chassée avec un excès de résine. Du fait de l'élévation de la pression, les inclusions gazeuses restantes se dissolvent dans la résine dès que celle-ci est gélifiée dans les évents qui ont permis d'éliminer l'excès de résine avec la plus grosse partie des gaz présents. Les réactions de polymérisation ou de polycondensation de la résine ont une énergie d'activation qui fait que les zones les plus chaudes, au contact du moule, commencent à polymériser beaucoup plus vite que les zones internes. Le caractère exothermique de cette réaction entraîne une augmentation en température des zones internes qui peut être très supérieure à celle du moule si l'objet est épais. Ceci gêne l'évacuation des calories produites par la réaction lorsque cette dernière s'effectue rapidement.

Il en résulte des hétérogénéités de température et d'avancement de la réaction. Ce caractère hétérogène peut être atténué en préchauffant la matière à mouler. Un tel procédé, s'il est efficace, présente notamment comme inconvénient d'utiliser des équipements lourds et coûteux comportant une presse.

De plus, lorsque les pièces à mouler présentent des épaisseurs importantes, l'effet d'hétérogénéité en température existant entre les zones externes de la masse moulée et ses zones internes est renforcé. Il se produit un transfert de l'échauffement de la zone externe vers la zone interne, cette dernière pouvant voir sa température devenir très supérieure à la température du moule. Lors du refroidissement après démoulage, le retrait thermique de la résine fait alors apparaître des décohésions entre la résine du matériau composite et le matériau de renfort, créant des zones où les gaz antérieurement dissous peuvent se placer à l'interface entre le renfort et la résine.

Lorsque l'utilisation d'une presse est impossible, par exemple pour fabriquer des pièces de dimensions importantes, il est connu d'employer le procédé de moulage au sac sous vide. Ce procédé nécessite une main d'oeuvre importante, et se révèle inadapté à la fabrication de pièces de faibles dimensions.

Lorsque l'on souhaite réaliser des pièces de toutes dimensions, il est possible de réaliser un moulage dit « au contact », sans pression. La qualité des produits obtenus par ce procédé n'est toutefois ni fiable ni parfaitement reproductible, ce qui conduit à largement surdimensionner les pièces.

Le procédé selon l'invention permet de pallier les inconvénients propres à chacun des procédés de l'art antérieur rappelés brièvement ci-dessus.

L'idée de l'invention est d'utiliser un moule qui est équipé de moyens qui lui sont propres et qui permettent en fonctionnement normal du procédé de moulage de ne pas utiliser de presse.

Ainsi, le moule est équipé de moyens adaptés pour exercer une pression sur un matériau disposé à l'intérieur, cette pression variant au cours du procédé de moulage. La valeur de la pression, ainsi que sa variation, sont choisies pour éliminer tous les produits volatils éventuellement présents dans le matériau et qui pourraient générer des défauts néfastes à la bonne tenue mécanique du produit final.

Par rapport aux procédés de l'art antérieur, le procédé de moulage selon l'invention présente notamment les avantages suivants :
- il utilise un équipement de moulage simple, modulaire et peu coûteux,
- il permet d'obtenir des produits présentant une qualité identique ou supérieure à celle des produits obtenus par le procédé conventionnel de moulage à chaud sans nécessiter l'utilisation d'équipements lourds,
- il est bien adapté pour une production en masse (en grandes quantités) et à faible coût,
- les produits moulés obtenus présentent une qualité fiable et reproductible, notamment une bonne tenue à la fatigue et au vieillissement.

La présente invention concerne un procédé de moulage de pièces en matériau composite. Le procédé se caractérise en ce qu'il comporte les étapes suivantes :
a) on garnit un moule comportant un évidement adapté pour recevoir le matériau composite et ayant une forme choisie en fonction de la forme finale, le moule étant équipé de moyens adaptés pour exercer une pression variable d'une valeur initiale Pi à une valeur finale Pf, la variation étant reliée à la transformation du matériau dans les conditions opératoires du procédé de moulage,
b) on exerce la pression variable pendant la durée entière du procédé de moulage de manière à chasser l'air inclus lors de la mise en place du matériau dans le moule et, éventuellement, les produits volatils occlus initialement dans la matériau composite, et
c) simultanément, on porte le moule rempli du matériau composite à une température permettant le passage du matériau de son état initial vers son état final.

Les moyens adaptés pour exercer la pression comportent par exemple des moyens de fermeture du moule qui sont solidaires du moule et un ensemble comportant des moyens élastiques, des moyens de mise en tension des moyens élastiques, et des moyens d'accrochage des moyens de fermeture.

On peut construire une base de données comprenant pour un matériau composite donné la valeur de pression initiale à appliquer et sa variation au cours du procédé de moulage pour une température donnée à partir d'essais réalisés sur différents matériaux.

La mise en température selon ce procédé s'effectue par exemple à une vitesse inférieure à 10°C par minute, et de préférence inférieure à 2°C par minute.

Le matériau composite est avantageusement un PREPRIP.

On sélectionne par exemple les caractéristiques des moyens élastiques, tels qu'un ressort, à partir de la base de données.

L'invention concerne aussi un dispositif selon l'invention permettant de mouler une pièce en matériau composite, comportant un ou plusieurs moules pourvus d'au moins un évidement destiné à recevoir le matériau composite. Il se caractérise en ce que le ou les moules peuvent être équipés de moyens adaptés pour exercer une pression dont la valeur varie d'une pression initiale Pi à une pression finale Pf, la variation étant reliée à la transformation du matériau composite dans les conditions opératoires du procédé de moulage, les moyens permettant d'exercer cette pression pendant la durée entière du procédé de moulage de manière à chasser les produits volatils inclus initialement dans la matériau composite, et des moyens de chauffage adaptés pour faire passer le matériau composite d'un état initial à un état final.

L'utilisation de la méthode et du dispositif selon l'invention servira avantageusement pour la fabrication de pièces destinées à l'industrie automobile.

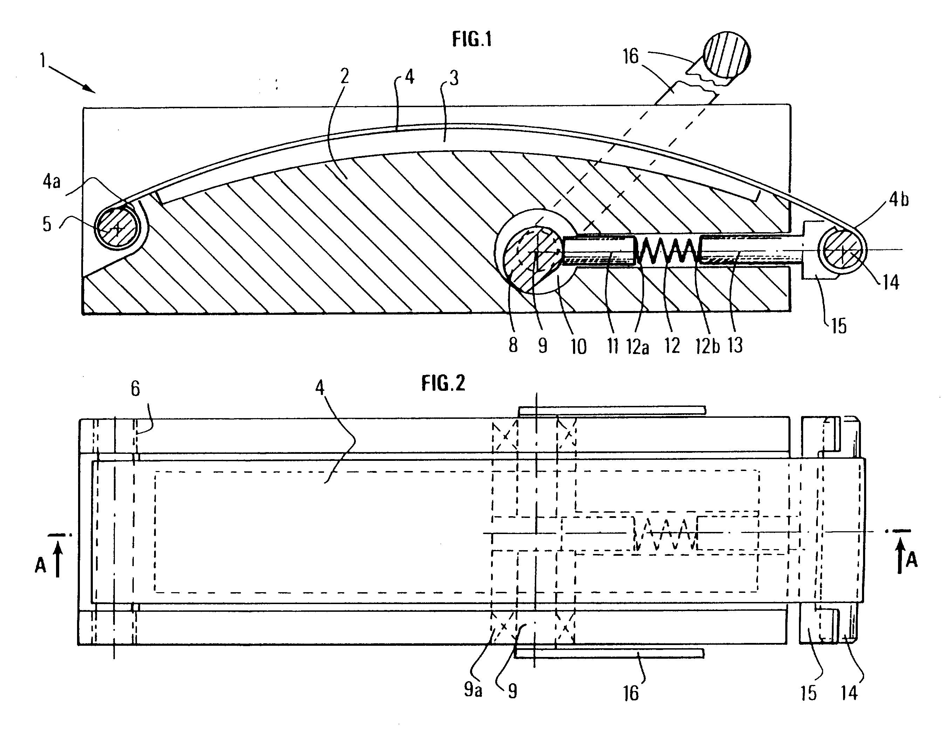

La présente invention sera mieux comprise et ses avantages apparaîtront plus nettement à la description qui suit d'un exemple de réalisation, nullement limitatif, illustré par les figures 1A et 1B qui schématisent une vue en coupe et une vue de dessus d'un exemple de moule utilisé pour mettre en oeuvre le procédé selon l'invention.

Sur la figure 1A, le moule 1 est constitué d'une matrice 2 en bois lamellé collé. La matrice comporte un évidement 3 dont les caractéristiques géométriques et les dimensions sont déterminées en fonction de la forme de l'objet souhaité. L'évidement 3 peut être obtenu par usinage des panneaux avant leur assemblage au moyen de tirants, et par collage en utilisant une colle ayant une bonne résistance thermique et une température de transition vitreuse qui n'est pas élevée de façon à permettre une prise à froid. La colle utilisée est, par exemple, un mélange époxyde constitué de diglycidyléther de bisphénol A (DGEBA) et de triméthylhexaméthylènediamine (TMD) dans les proportions 100 parties de DGEBA pour 20,25 parties de TMD.

Cet évidement 3 est aussi adapté pour recevoir le matériau composite, ce dernier pouvant être constitué par exemple d'une résine et de fibres de renfort. D'autres exemples de matériau pouvant être utilisés sont donnés dans la suite de la description.

Le moule est pourvu d'un ensemble de moyens adaptés pour exercer sur le matériau composite une pression fixée initialement à une valeur Pi et qui évolue au cours du procédé de moulage. La valeur initiale et la variation de pression en cours de procédé sont déterminées pour maintenir une pression suffisante permettant d'éliminer les produits volatils pouvant être présents dans le matériau composite et obtenir à la fin du procédé de moulage un objet exempt de bulles et de micro-bulles. Ces moyens sont solidaires du moule et présentent aussi comme particularité d'être suffisamment souples pour adapter la valeur de pression en fonction de l'évolution physico-chimique du matériau qui le fait passer d'un état initial à son état final, pouvant correspondre au début du procédé de moulage et à la fin.

Cet ensemble de moyens peut comporter une lame d'acier 4 qui est articulée par rapport à la matrice 2 du moule 1. Une première extrémité 4a de la lame d'acier est fixée à un axe 5 disposé dans un passage 6 foré dans la matrice 2. La deuxième extrémité 4b de la lame est libre. La lame d'acier va coopérer avec un ensemble d'éléments, qui sont par exemple insérés dans la matrice, et qui comporte une came 8 solidaire de la matrice du moule par un axe 9 traversant la matrice par le passage 10. L'axe 9 est par exemple maintenu et centré à l'aide de roulements 9a. La came 8 est reliée à une première extrémité d'un premier piston 11, dont la deuxième extrémité communique avec la première extrémité 12a d'un ressort 12, la deuxième extrémité 12b du ressort étant liée à un deuxième piston 13. L'extrémité du deuxième piston 13 qui n'est pas reliée au ressort est attachée à un point d'ancrage ou d'accrochage 15 qui va recevoir l'extrémité libre 4b de la lame d'acier.

Un levier 16 est relié à la came 8 pour permettre d'actionner les différents éléments de manière à obtenir la valeur de pression pour réaliser le moulage de l'objet. La lame d'acier 4 étant accrochée au niveau du point d'ancrage 15, le levier 16 est actionné pour la rabattre sur le matériau composite à mettre en forme. Au cours de ce mouvement, et du fait de l'accrochage de l'extrémité de la lame 4 au point 15, le ressort 12 se trouve en compression au niveau de sa deuxième extrémité 12b. Le ressort possède une longueur I2 inférieure à sa longueur initiale 1. Le déplacement du levier provoque une rotation de la came 8 qui a pour effet de déplacer le premier piston 11 de façon à déplacer la première extrémité du ressort 12a, ce qui conduit à une diminution de sa longueur d'une valeur I1 dans une direction qui est opposée à la dimension de longueur I2 résultant du rabat de la lame d'acier. La valeur I1 est fonction de la pression initiale appliquée sur le matériau composite.

Les caractéristiques du ressort, par exemple sa raideur k, peuvent être déterminées en fonction du matériau composite et de la valeur de pression souhaitée au cours du procédé de moulage pour éliminer les gaz éventuels et les produits volatils.

Ces caractéristiques seront par exemple déduites d'essais réalisés préalablement sur des matériaux connus pour des valeurs de température données et en contrôlant l'état du produit obtenu (matériau composite qui s'est transformé sous l'effet de la pression et de la température), par exemple par un contrôle visuel à chaque fin de cycle, on peut construire une base de données. La base de données fait correspondre à un matériau donné la valeur de pression à appliquer initialement ainsi que sa courbe de variation.

Pour des objets en composite, lorsque la fibre utilisée est la fibre de verre, le contrôle peut être visuel, tel qu'un contrôle de transparence.

Lorsque l'on souhaite réaliser un objet ayant une courbure appréciable, l'effet cabestan obtenu par la tension de la lame tendue par la compression du ressort assure une pression suffisante.

Le procédé de moulage fait appel à des moyens de mise en température qui sont classiques, et qui peuvent être des fours continus ou discontinus connus dans ce domaine technique. Ils présentent toutefois la particularité d'effectuer la mise en température et sa variation à une vitesse suffisamment faible pour éviter de générer des hétérogénéités de température qui sont néfastes à la qualité du produit final.

La plage de variation de la température lors du procédé de moulage est choisie en fonction du matériau composite à mettre en forme.

Par exemple, pour un matériau composite comportant une résine réticulable et des fibres de renfort, on sait que la résine réticulable peut être classée selon trois états A, B et C, en fonction du degré de polymérisation qu'elle atteint :
- l'état A correspond à une résine liquide et soluble à froid et à chaud,
- l'état B correspond à une résine solide à température ambiante, mais fusible et soluble,
- l'état C correspond à une résine solide, insoluble et infusible.

A l'état A, le taux de polymérisation des molécules est faible, ainsi que le poids moléculaire. A l'état B, le taux de polymérisation est plus important conduisant à une solidification à la température ambiante, mais il n'y a pas encore de réticulation de réseau ce qui fait que la résine reste fusible et soluble. A l'état C, la réticulation existe, rendant irréversible la solidification.

Cette classification est décrite par exemple dans le brevet US-A-5.133.995 et dans « Plastics technology » de Robert V.Milby édité par Mc Graw Hill, Inc en 1973 aux USA.

Le procédé selon l'invention consiste donc à mettre en oeuvre les étapes suivantes :
a) on utilise un moule comportant des moyens solidaires du moule et qui sont adaptés pour exercer une pression variant d'une valeur initiale Pi et à une valeur finale Pf en fin de moulage, le moule comportant au moins un évidement qui reçoit le matériau à mouler, l'évidement ayant une forme adaptée à la forme de la pièce finale souhaitée,
b) on applique la pression variable pour chasser les gaz présents dans le matériau composite et, simultanément, on porte le moule garni du matériau composite à une température qui permet la transformation du matériau composite jusqu'à son état final.

### Matériaux plus spécialement adaptés pour la mise en oeuvre du procédé selon l'invention

Les moyens de mise et de maintien en pression étant limités au niveau de la pression qu'ils peuvent exercer, on utilisera préférentiellement des matériaux dont la teneur en gaz ou en produits volatils est faible initialement.

On pourra remplir le moule avec des préimprégnés comportant initialement un pourcentage de micro-bulles très faible ou nul et obtenus par exemple à partir de l'un des procédés décrits dans les brevets ou demandes de brevets FR-2.612.086 ou FR-2.744.040.

Il est ainsi possible d'utiliser des préimprégnés comportant des renforts fibreux et une résine, tels que les produits "PREPRIP" (marque déposée par l'IFP et commercialisés par la société Interface).

De manière plus générale, la proportion de produits volatils ou de gaz occlus initialement présents sera inférieure à 3% en volume.

Le degré de réactivité de la résine utilisée, très réactive ou peu réactive, sera choisi en fonction du produit final souhaité. Ainsi, pour fabriquer des objets ayant une épaisseur inférieure à 3mm, on utilisera une résine très réactive alors que pour fabriquer des objets présentant une épaisseur supérieure à 20 mm, on emploiera des produits moins réactifs

Dans le domaine des colles pour automobiles, où l'on recherche des produits polymérisant en quelques secondes à 100°C, une formulation polymérisant en 15 minutes à 150°C sera une formulation très lente (à très faible réactivité), alors que dans le domaine des résines thermostables, où l'on accepte des polymérisations nécessitant plusieurs heures à 250°C, cette même résine sera considérée comme très réactive.

Si l'on définit la réactivité comme l'inverse du temps (en minutes) nécessaire pour obtenir une polymérisation optimale de la résine à la température de moulage, on pourra dire que le produit de cette réactivité par l'épaisseur de l'objet moulé sera de l'ordre de 1 (un) pour les procédés industriels courants, comme le moulage à la presse ou le collage, ce qui signifie que l'on accepte une durée de moulage de 1 minute par mm d'épaisseur compté de la surface chauffante à la zone qui en est le plus éloignée. Dans le cas où le produit est chauffé sur deux faces, comme au moulage à la presse à chaud, la zone la plus éloignée est le centre de la pièce.

Ainsi, pour mouler un objet de 30 mm d'épaisseur à la presse, on réglera la composition chimique et, en particulier, la teneur en accélérateur pour avoir une réaction presque totale à la température de la presse, en 15 minutes (réactivité=1/15).

Pour un objet de 1 mm d'épaisseur, on utilisera une résine dont la polymérisation sera presque achevée en 30 secondes (réactivité = 1/0,5= 2).

Pour un collage de 0,1 mm d'épaisseur, on recherchera une résine polymérisant en 3 secondes si on chauffe sur les deux faces (réactivité 20), et six secondes si on ne chauffe qu'une face (réactivité 10).

Cette valeur de 1 minute par millimètre est acceptée industriellement pour permettre un amortissement du matériel sans trop pénaliser les propriétés d'utilisation du produit (propriétés mécaniques à long terme et vieillissement principalement).

L'utilisation du procédé selon l'invention permet d'amortir chaque moule-presse, beaucoup moins coûteux qu'une presse et un moule conventionnels, sur un nombre beaucoup plus faible d'objets moulés, donc d'utiliser des résines se moulant en un temps beaucoup plus élevé à la même température, ou de mouler la même résine à température plus faible. On choisira de préférence des résines permettant une polymérisation presque totale (>95%) en une durée de 5 à 10 minutes par millimètre d'épaisseur de l'objet à la température de moulage considérée.

### Exemple

L'exemple donné ci-après, à titre illustratif et nullement limitatif, illustre de manière claire le procédé selon l'invention et les avantages qu'il offre par rapport aux procédés de l'art antérieur.

Le matériau utilisé pour fabriquer le produit final est une bande de PREPRIP constituée de 20 rovings 2400 tex imprégnés par une composition époxyde dont les proportions exprimées en masse sont données ci-après :

| | | |
|---|---|---|
| une résine de base | Epikote 828 (DGEBA) | 100 parties |
| un durcisseur | Anhydride méthylnadique | 90 parties |
| un accélérateur | Benzyldiméthylamine | 1 partie |

### La proportion Verre/résine est de 50/50 en volume (67/33 en poids)

Les rovings sont disposés de manière à former une bande régulière de 68 mm de largeur.

L'imprégnation a été réalisée par exemple au moyen d'un rouleau chaud, comme il a été décrit dans le brevet (FR-2.612.086) suivi d'un tunnel chaud, comme décrit dans la demande de brevet (FR-2.744.040), et le produit a été enroulé selon les moyens conventionnels et habituellement utilisés dans ce domaine industriel.

Les bandes enroulées ont été conservées par exemple à la température ambiante voisine de 23°C pendant huit jours, pour permettre à la réaction de polycondensation d'avancer légèrement pour que le produit puisse être manipulé sans difficultés, mais qu'il soit légèrement collant sous l'effet d'une légère pression (état A avancé).

Les bandes sont ensuite disposées dans l'évidement 2 du moule, et la bande en acier 3 est rabattue sur le matériau, puis l'extrémité 4b de la lame est positionnée dans le logement 15, enfin le levier 16 est abaissé pour faire tourner la came 8, ce qui comprime le ressort 12 tout en tendant la lame 4 avec un effort opposé à la compression du ressort 12. Cette tension de la lame 4 entraîne dans le matériau composite une pression dont la valeur est fixée initialement selon la méthode décrite ci-dessus pour chasser les inclusions éventuelles d'air enfermées lors de l'empilement des couches. La pression qui est exercée sur le matériau est obtenue en utilisant un ressort choisi en fonction du matériau et de la forme finale de la pièce, comme il a été mentionné ci-dessus.

Par exemple, pour un objet ayant un rayon de courbure de l'ordre de 2 m et une largeur de 0,07 m, formé à partir d'un matériau de type PREPRIP dont la composition a été donnée ci-dessus, on exercera une pression voisine de 0,07 MPa, à l'aide d'un ressort donnant une tension de 10 000 N quand il est allongé ou raccourci de 1 cm, en utilisant une came 8 ayant une course suffisante pour permettre de comprimer ledit ressort de 1 cm.

L'ensemble est ensuite porté dans une étuve à une température de l'ordre de 90°C pendant environ 2 heures, puis on augmente la température jusqu'à atteindre 140°C, à une vitesse de 2°C par minute. L'ensemble est maintenu à cette température pendant 4 heures pour obtenir un taux de polymérisation de la résine supérieur à 95%.

On laisse refroidir l'ensemble en coupant le chauffage, puis on démoule l'objet exempt d'inclusions ou de bulles de gaz.

L'homogénéité de l'objet final peut être contrôlée visuellement, dans le cas où le renfort est de la fibre de verre, par un contrôle de transparence qui révélerait la présence de bulles s'il en existait, ou de micro-bulles par un aspect laiteux ou blanchâtre.

Ainsi, l'objet moulé selon l'exemple ci dessus est presque transparent, il ne présente ni bulles ni zones blanchâtres, et on peut lire des caractères d'imprimerie de corps 12 à travers les zones d'épaisseur inférieure à 5 mm, et des caractères d'imprimerie de corps 32 à travers les zones d'épaisseur inférieure à 30 mm.

### Contrôle de la mise en tension ou de la pression exercée sur le matériau inclus dans la matrice

L'utilisation de moyens de pression élastiques, par exemple un ressort, permet de contrôler la mise en pression du matériau composite et son maintien pour chasser d'éventuelles inclusions ou des bulles de gaz pendant toute la durée du procédé de moulage.

On choisira la course et la tension exercée par le ressort sur la bande en acier pour parvenir au résultat susmentionné.

La tension dépend de la pression nécessaire pour chasser une partie de la résine avec les gaz qui y sont occlus. Elle sera d'autant plus faible que le préimprégné contiendra moins de gaz occlus. La course dépend de la quantité d'air enfermée lors du drapage.

Selon la quantité de gaz (air en particulier) enfermé entre les couches de préimprégné lors du drapage, cette quantité dépendant de la raideur dudit préimprégné, selon qu'il est à l'état A frais, à l'état A avancé ou à l'état B (solide à froid), il faudra une course plus ou moins longue au ressort pour évacuer les gaz tout en maintenant la pression.

Il faudra beaucoup moins de course avec un préimprégné très souple contenant une résine à l'état A frais pour lequel l'essentiel de l'air est éliminé lors du drapage, qu'avec un préimprégné moins souple contenant une résine à l'état A avancé qui va en enfermer plus, qu'enfin avec un préimprégné très raide dont la résine est à l'état B et qui ne commencera à s'assouplir pour laisser partir l'air que quand il sera suffisamment chaud pour permettre la fusion de la résine.

Le moule utilisé pour mettre en oeuvre le procédé selon l'invention peut être usiné dans un matériau métallique tel que l'acier.

De préférence, il sera formé à partir de bois comme il a été décrit à la figure 1 ou encore par moulage de tissus de verre imprégnés d'une composition époxyde résistant à haute température, comportant par exemple de l'Epikote 828 (DGEBA) 100 parties en poids, et de la Diaminodiphénylsulfone 36 parties en poids.

Ces deux dernières variantes de réalisation, présentent comme avantage d'être moins coûteuses et donc mieux adaptées à une production en masse, qui utilise de nombreux moules.

Dans ce cas il sera possible d'utiliser un mode de cuisson continu tel qu'un four-tunnel, ou encore une cuisson par batch en plaçant les moules garnis et fermés dans une enceinte, par exemple sur des claies, puis en procédant au lancement du programme de cuisson lorsqu'une étuve est garnie.

La méthode selon l'invention s'applique particulièrement bien pour mouler des pièces en PREPRIP utilisées dans le domaine automobile, telles que des ressorts ou des suspensions.

Elle peut également être utilisée pour mouler des objets de taille moyenne, tels que des semelles de prothèses orthopédiques, des couvercles de coffrets de distribution électrique ou gazière, des portes ou des toits de voitures fabriqués en petite série, des portes de meubles, des vasques d'éclairage ou de lavabo, des cadres de tableaux, etc.... .

## Revendications

1. Procédé de moulage de pièces en matériau composite, caractérisé en ce qu'il comporte les étapes suivantes :
a) on garnit un moule comportant un évidement adapté pour recevoir le matériau composite et ayant une forme choisie en fonction de la forme finale, ledit moule étant équipé de moyens adaptés pour exercer une pression variable d'une valeur initiale Pi à une valeur finale Pf, ladite variation étant reliée à la transformation du matériau dans les conditions opératoires du procédé de moulage,
b) on exerce ladite pression variable pendant la durée entière du procédé de moulage de manière à chasser l'air inclus lors de la mise en place du matériau dans le moule et, éventuellement, les produits volatils occlus initialement dans la matériau composite, et
c) simultanément on porte le moule rempli dudit matériau composite à une température permettant le passage dudit matériau de son état initial vers son état final.

2. Procédé selon la revendication 1, caractérisé en ce que lesdits moyens adaptés pour exercer la pression comportent des moyens de fermeture du moule qui sont solidaires dudit moule et un ensemble comportant des moyens élastiques, des moyens de mise en tension desdits moyens élastiques, et des moyens d'accrochage desdits moyens de fermeture.

3. Procédé selon l'une des revendications 1 à 2, caractérisé en ce que l'on choisit ladite valeur initiale Pi et la variation de la pression au cours de l'étape b) à partir d'une base de données construite à partir d'essais réalisés sur différents matériaux connus pour des valeurs de températures données.

4. Procédé selon la revendication 3, caractérisé en ce que la mise en température s'effectue à une vitesse inférieure à 10°C par minute, et de préférence inférieure à 2°C par minute.

5. Procédé selon l'une des revendications 1 à 4, caractérisé en ce que l'on utilise des préimprégnés comportant des renforts fibreux et une résine, tels que les produits "PREPRIP".

6. Dispositif permettant de mouler une pièce en matériau composite, comportant un ou plusieurs moules (1) pourvus d'au moins un évidement (3) destiné à recevoir ledit matériau composite, caractérisé en ce que le ou lesdits moules sont équipés de moyens (4, 8, 11, 12, 13, 16) adaptés pour exercer une pression dont la valeur varie d'une pression initiale Pi à une pression finale Pf, ladite variation étant reliée à la transformation du matériau composite dans les conditions opératoires du procédé de moulage, lesdits moyens permettant d'exercer cette pression pendant la durée entière du procédé de moulage de manière à chasser les produits volatils inclus initialement dans la matériau composite, et des moyens de chauffage adaptés pour faire passer ledit matériau composite d'un état initial à un état final.

7. Utilisation du procédé selon la revendication 5 et du dispositif selon la revendication 6 pour la fabrication de pièces destinées à l'industrie automobile.
